# EUROPEAN PATENT SPECIFICATION

(11) **EP 1 346 593 B1**
(45) Date of publication and mention of the grant of the patent: **07.11.2007**
(21) Application number: 00990811.2
(22) Date of filing: 21.12.2000
(51) Int. Cl.: H04Q 7/38, H04L 29/12

(54) **OVER-THE-AIR (OTA) SERVICE PROVISIONING IN A MOBILE COMMUNICATIONS SYSTEM**
DIENSTBEREITSTELLUNG ÜBER FUNK IN EINEM MOBILKOMMUNIKATIONSSYSTEM
FOURNITURE DE SERVICES PAR LA VOIE DES ONDES DANS UN SYSTEME DE COMMUNICATIONS MOBILES

(43) Date of publication of application: 24.09.2003
(73) Proprietor: Nokia Corporation, FIN-02150 Espoo (FI)
(72) Inventor: STAACK, Jens, c/o Nokia Networks Oy, FIN-02150 Espoo (FI); LOUGHNEY, John, c/o Nokia Networks Oy, FIN-02150 Espoo (FI)
(74) Representative: TBK-Patent
(86) International application number: PCT/EP2000/013119
(87) International publication number: WO 2002/051188

(56) References cited:
- EP-A- 1 043 906
- WO-A-98/51100
- WO-A-99/18515
- TAYLOR A: "OVER-THE-AIR SERVICE PROVISIONING" ANNUAL REVIEW OF COMMUNICATIONS, NATIONAL ENGINEERING CONSORTIUM, CHICAGO, IL, US, vol. 51, 1998, pages 953-959, XP000793196 ISSN: 0886-229X

## Description

### FIELD OF THE INVENTION

The present invention relates to providing a terminal with information, parameters and/or settings required to obtain services subscribed to the terminal.

### BACKGROUND OF THE INVENTION

Service provisioning means to provide a terminal which may be a new "blank" terminal, with the needed information, parameters and/or settings required to obtain services subscribed to the terminal. The needed information, parameters and/or settings may include for instance communication network parameters, such as GPRS (General Packet Radio Service) parameters or UMTS (Universal Mobile Telecommunication System) parameters, WAP (Wireless Application Protocol) parameters comprising a WAP Gateway address, a URL (Uniform Resource Locator) for Setup, a Home page and Favorites, WWW (World Wide Web) parameters comprising an HTTP (Hyper Text Transfer Protocol) Proxy address, SMTP/POP3 addresses, a URL for Setup, a Home page and Favorites, Public keys, IPv4, IPv6 and a Default Classmark for multi-classmark devices.

Service provisioning of terminals can be done either manually by the user who enters the parameters into the terminal, or somehow automated. There are several possibilities to provide the terminal with the needed information, parameters or settings, e.g. the terminal contacts a dedicated service provisioning server. For example, for WAP service provisioning, a user sends an SMS (Short Message Service) to a predefined number "400" with the content "WAP", for example, and gets the WAP parameters pushed via SMS.

Having the user input data into the terminal risks human error. Human errors are less probable by using an automatic system. However, conventionally, a plurality of automatic systems has to be used to provide the terminal with all the information, parameters and settings required for the terminal to contact dedicated services on the respective service provisioning servers.

In the WO 98/51100 A remote feature code programming for mobile stations is described. The base station of a wireless communications network determines what features a mobile station will support, then downloads information to the mobile station which will notify the mobile station of which network features are available and how they may be accessed in the local network. Specifically, the base station provides the feature codes that are required to access the network features. The base station may also inquire into what features the mobile station supports. Each of these communications may take place over the combination of the Paging Channel/Access Channel, collectively, the Control Channel, or the Traffic Channel. With the downloaded information, the mobile station user may select a desired feature using the method to which he or she is accustomed, i.e., either by selecting a menu location or by entering a familiar sequence of keystrokes. The mobile station's internal processor converts the entered values into the feature codes corresponding to the selected features within the network. The process of downloading the feature code information does not require the user's intervention, such that any conversion required from the user's familiar feature access process is transparent to the user.

Moreover, by Taylor A: "Over-The-Air Service Provisioning", Annual Review of Communications, National Engineering Consortium, Chicago, IL, US, vol. 51, 1998, XP000793196, Over-the-Air service provisioning (OTASP) is described as a capability that allows permanent memory in a mobile unit to be programmed over-the-air by the service provider via automated processing. A customer service center provides an operator with voice communication with a mobile subscriber. It also controls the provisioning actions via communications with an OTA function (OTAF) box and provides an interface to home location register (HLR) for subscriber record manipulations. A mobile station as handset being provisioned for services, sends current contents of its permanent memory when requested by the OTAF and loads the contents of its temporary memory when received from the OTAF, as well as committing temporary memory to permanent memory as directed by the OTAF.

### SUMMARY OF THE INVENTION

It is an object of the present invention to provide a single method and system for provisioning services in an improved manner.

This object is achieved by a method according to claim 1, a communication network system according to claim 15, an apparatus according to claim 29, and a user terminal according to claim 37.

According to the invention, a terminal examines records returned from ENUM serving means and determines service data on the basis of the examined records. The service data may comprise information, parameters and/or settings for obtaining services on a service provisioning server by the terminal.

A system according to the invention may further comprise formatting means for receiving the terminal identification of a querying terminal, for formatting the terminal identification to a corresponding terminal identification code, and for querying the ENUM serving means on the code.

The ENUM serving means may have entries for the full code of a terminal identification and/or for a part of the code of a terminal identification.

In addition, the ENUM serving means may have entries which are the same for a group of terminals.

The ENUM serving means may also have entries for a lookup on a further serving means.

A new blank terminal may perform the query of the ENUM serving means, and/or the query of the ENUM serving means may be performed every time a new session is activated. Moreover, the query may be performed for updating services, and/or for provisioning new services.

The terminal identification may be the MSISDN of the terminal or a user's name.

The information, parameters and/or settings may comprise communication network parameters such as GPRS parameters and UMTS parameters, WAP parameters, a WAP gateway address, a URL for Setup, a Home page, Favorites , Public keys, IPv4, IPv6, a Default Classmark for multi-classmark devices, software updates, applets, a network storage location, user preference list and firmware updates.

Moreover, the ENUM serving means may be implemented in a DNS server in a data network.

According to a further aspect of the present invention, the above-mentioned object may be achieved by an apparatus using IETF ENUM for provisioning services to terminals in a communication network system, said apparatus having entries in correspondence with codes of terminal identifications;
wherein, when a terminal queries said apparatus on the basis of an identification of the terminal, said apparatus returns records corresponding to a code of the terminal identification to the querying terminal.

According to a still further aspect of the present invention, the above-mentioned object may be achieved by a user terminal for communicating with a network system using IETF ENUM for provisioning services to terminals in the system,
wherein the user terminal is adapted to query an ENUM serving means having entries in correspondence with codes of terminal identifications, on the basis of an identification of the user terminal.

Moreover, the user terminal may examine records returned from the ENUM serving means upon the query, the records corresponding to a code of the terminal identification, and determine service data on the basis of the examined records.

According to the present invention, the information, parameters and settings enabling the terminal to obtain services on respective service provisioning servers are provisioned to the terminal by an ENUM serving means such as an ENUM DNS (ENUM Domain Name Server) with only the terminal identification such as the MSISDN (ISDN number for Mobile Subscriber) defined, and all the services are in use immediately as they are defined in the DNS. New functionalities and properties for "blank" terminals can be defined fast in a scaleable manner. In addition, services for users with different capabilities can be provided. The terminal only needs to know how to use the records returned from the DNS. Human errors are less probable by using the automatic system according to the present invention. Further advantages of the present invention are that ENUM is scalable, flexible and cheap to implement as it can use standard DNS servers.

### BRIEF DESCRIPTION OF THE DRAWINGS

Fig. 1 shows a schematic diagram of a service provisioning system according to the present invention.
Fig. 2 shows a flowchart of steps performed in the service provisioning system according to the present invention.
Fig. 3 shows a schematic diagram of a service provisioning system according to an embodiment of the present invention.

### DESCRIPTION OF THE PREFERRED EMBODIMENT

The idea of the present invention is to use IETF (Internet Engineering Task Force) ENUM for provisioning services to terminals in a communication network system. ENUM is an IETF standardized system for providing address translations between telephone numbers and URLs. It provides a system for starting different ways of communication with a device associated to the input phone number.

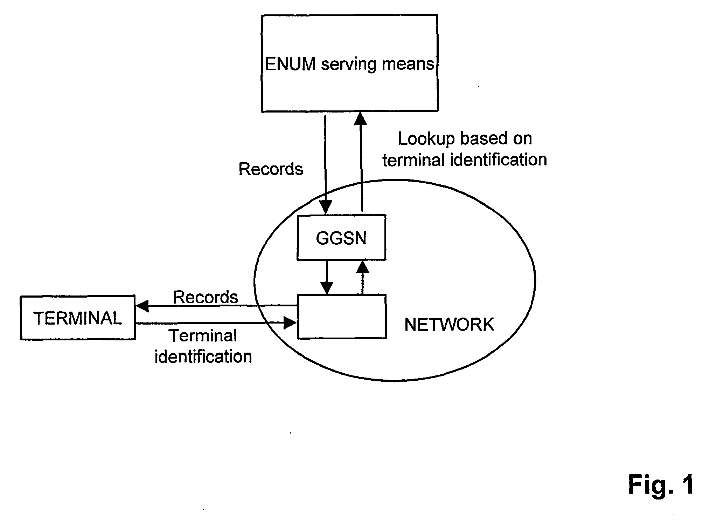

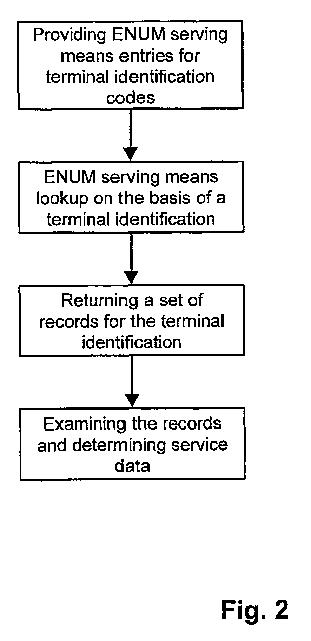

In the following, the concept of the present invention will be described with respect to Figs. 1 and 2.

As shown in Fig. 1, a terminal which may be a new "blank" terminal queries an ENUM serving means on the basis of its terminal identification. The terminal identification may be the MSISDN of the terminal, a terminal user's name or anything that identifies the terminal or user. The terminal performs the query by sending its identification, e.g. by calling its own MSISDN, sending a message such as SMS or USSD including the identification. The terminal identification is directed through the network to which the terminal attaches and routed to the ENUM serving means. The terminal identification is formatted into an ENUM request format transparently on the way. The formatting can take place e.g. in the requesting terminal itself, or in any appropriate network element provided with translation capability. In this embodiment the formatting means is located in connection with the GGSN. The purpose of formatting is to format the terminal identification into a code understandable by the ENUM serving means. The code is sent to the ENUM serving means for a lookup on the code. The ENUM serving means returns a set of records for the queried code to the terminal via the formatting means and the network.

According to Fig. 2, in a first step, the ENUM serving means is provided with entries for terminal identification codes. These entries can be on different levels which will be described later. When an ENUM serving means lookup on the basis of a terminal identification is performed as indicated in the second step of Fig. 2, the ENUM serving means returns a set of records for the terminal identification according to the third step of Fig. 2. The terminal then examines the returned records and determines service data therefrom. The service data comprise the needed information, parameters and/or settings to obtain services subscribed to the terminal. The needed information, parameters and/or settings may include communication network related parameters such as GPRS parameters or UMTS parameters, WAP parameters comprising a WAP Gateway address, a URL for Setup, a Home page and Favorites, WWW parameters comprising an HTTP Proxy address, SMTP/POP3 addresses, a URL for Setup, a Home page and Favorites, Public keys, IPv4, IPv6, a Default Classmark for multi-classmark devices, software updates, applets, network storage location, a user preference list, firmware updates, etc.

According to the present invention, an ENUM serving means query is performed by the terminal and data are returned to the terminal. The query can be performed only once by a new "blank" terminal or every time a new session or context is activated or as often as needed also during a session or context, e.g. in order to update services or to provision new services.

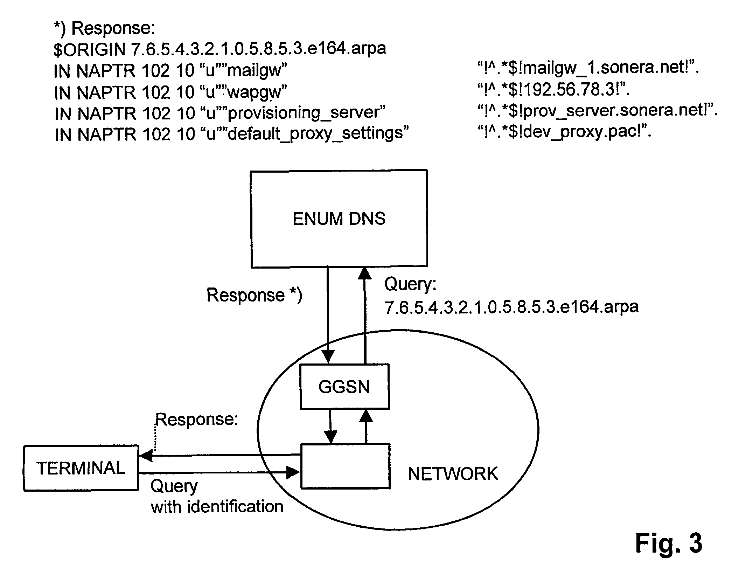

In the following, a preferred embodiment of the present invention will be described with respect to Fig. 3.

According to the preferred embodiment, the terminal identification is the MSISDN number of the terminal. The ENUM serving means is implemented in a DNS. When a user gets a blank terminal, i.e. a terminal without any information, parameters or settings, and a SIM (GSM Subscriber Identity Module) card with the MSISDN +358 50 123 45 67, for example, the blank terminal gets the needed parameters by making an ENUM query, as it is shown in Fig. 3. The E.164 number is formatted into the code 7.6.5.4.3.2.1.0.5.8.5.3.e164.arpa, and the ENUM DNS is queried on this code. The formatting of the query can take place in the terminal, or in any network element on the way which is provided with the capability of formatting. As an example of this, in the present embodiment the GGSN network element is provided with means for formatting. The query from the terminal can take place e.g. by making a call to the MS's own MSISDN, or by sending a message to the network. As a response on the query, the ENUM DNS returns the following record for the code 7.6.5.4.3.2.1.0.5.8.5.3.e164.arpa:

```
 $ORIGIN 7.6.5.4.3.2.1.0.5.8.5.3.e164.arpa
 IN NAPTR 102 10 "u""mailgw"                 "!^.*$!mailgw_1.sonera.net!".
 IN NAPTR 102 10 "u""wapgw"                  "!^.*$!192.56.78.3!".
 IN NAPTR 102 10 "u""provisioning_server"    "!^.*$!prov_server.sonera.net!".
 IN NAPTR 102 10 "u""default_proxy_settings" "!^.*$!dev_proxy.pac!".
```

The DNS entries can also be on different levels. This means that there can be DNS entries which are the same for all users of one operator's network, e.g. the WAP Gateway, represented by the following entry in the DNS:

```
 $ORIGIN 5.8.5.3.e164.arpa
 IN NAPTR 102 10 "u" "wapgw"                 "!^.*$!192.56.78.3!".
```

Also, the DNS can be used for loadsharing. According to the example of the WAP Gateway, the DNS entry becomes:

```
 $ORIGIN 5.8.5.3.e164.arpa
 IN NAPTR 102 10 "u" "wapgw"                "!^.*$!wapgw.sonera.com".
```

A further lookup on wapgw.sonera.com returns:

```
 ;; Pref Weight Port Target
  wapgw.sonera.com IN SRV 0    0    1000 glc1.nokia.com
                   IN SRV 0    0    1000 192.56.78.0
                   IN SRV 0    0    1000 192.56.78.1
                   IN SRV 0    0    1000 192.56.78.2
```

Moreover, there can be entries in the DNS for a group of users with the same number range (like +358 50 77X XXXX, e.g. for all Nokia employees) of a network operator. Then, the entry of the mail gateway, for example, is:

```
 $ORIGIN 7.7.0.5.8.5.3.e 164.arpa
 IN NAPTR 102 10 "u" "mailgw_nokia"           "!^.*$!mailgw_nokia.nokia.com!" .
```

Furthermore, in case of load sharing in e.g. services or resources based on a number range, e.g. there may be entries of different MMS relays for number range +358 50 5XX XXXX -> MMS relay 1, and number range +358 50 6XX XXXX -> MMS relay 2:

```
 $ORIGIN 5.0.5.8.5.3.e164.arpa
 IN NAPTR 102 10 "u" "mmsservice+E2U"
   "!^.*$!smtp:0407499122@mmmsrelay_1.sonera. net"
```

and

```
 $ORIGIN 6.0.5.8.5.3.e164.arpa
 IN NAPTR 102 10"u" "mmsservice+E2U"
   "!^.*$!smtp:0407499122@mmmsrelay_2.sonera.net"
```

In addition, there can be DNS entries for a single MSISDN of a network operator, e.g. the SIP URL, tel, email address, and the MMS relay entry becomes:

```
 $ORIGIN 2.2.1.9.9.4.7.0.4.8.5.3.e164.arpa
 IN NAPTR 102 10"u""sip+E2U"    "!^.*$!sip:john.loughney@sonera.net!".
 IN NAPTR 102 10"u""mailto+E2U" "!^.*$!mailto:0501234567@sonera messi.net!".
 IN NAPTR 102 10"u""tel+E2U"    "!^.*$!tel:+358407499122!".
```

As can be seen form the foregoing, using ENUM for service provisioning yields a scaleable and flexible system and method which is cheap to implement and reduces the change of human errors.

While the invention has been described with reference to a preferred embodiment, the description is illustrative of the invention and is not to be construed as limiting the invention. Various modifications and applications may occur to those skilled in the art without departing from the scope of the invention as defined by the appended claims.

## Claims

1. A method of using Internet Engineering Task Force standardized system ENUM providing address translations between telephone numbers and Uniform Resource Locators, for provisioning services to terminals in a communication network system, said method comprising the steps of:
providing entries in an ENUM serving means in correspondence with codes of terminal identifications;
querying the ENUM serving means by a terminal on the basis of an identification of the terminal;
returning records corresponding to a code of the terminal identification from the ENUM serving means to the querying terminal; and
examining the records returned from the ENUM serving means by the terminal and determining service data on the basis of the examined records, wherein the service data comprise information, parameters and/or settings for obtaining services on a service provisioning server by the terminal.

2. A method according to claim 1, wherein the querying step comprises the step of:
formatting the terminal identification to a corresponding terminal identification code and querying the ENUM serving means on the code.

3. A method according to claim 1, wherein the ENUM serving means is provided with entries for the full code of a terminal identification.

4. A method according to claim 1, wherein the ENUM serving means is provided with entries for a part of the code of a terminal identification.

5. A method according to claim 1, wherein the ENUM serving means is provided with entries which are the same for a group of terminals.

6. A method according to claim 1, wherein the ENUM serving means is provided with entries for a lookup on a further serving means.

7. A method according to claim 1, wherein the querying step is performed by a new blank terminal.

8. A method according to claim 1, wherein the querying step is performed every time a new session is activated.

9. A method according to claim 1, wherein the querying step is performed for updating services.

10. A method according to claim 1, wherein the querying step is performed for provisioning new services.

11. A method according to claim 1, wherein the terminal identification is the MSISDN of the terminal.

12. A method according to claim 1, wherein the terminal identification is a user's name.

13. A method according to claim 1, wherein the information, parameters and/or settings comprise communication network parameters, WAP parameters, a WAP gateway address, a URL for Setup, a Home page, Favorites , Public keys, IPv4, IPv6, a Default Classmark for multi-classmark devices, software updates, applets, a network storage location, user preference list and firmware updates.

14. A method according to claim 1, wherein the ENUM serving means is implemented in a DNS server in a data network.

15. A communication network system for using Internet Engineering Task Force standardized system ENUM providing address translations between telephone numbers and Uniform Resource Locators, for provisioning services to terminals in the system, said system comprising:
ENUM serving means having entries in correspondence with codes of terminal identifications;
wherein, when a terminal queries the ENUM serving means on the basis of an identification of the terminal, the ENUM serving means is adapted to return records corresponding to a code of the terminal identification to the querying terminal and the terminal is adapted to examine the records returned from the ENUM serving means and determine service data on the basis of the examined records, wherein the service data comprise information, parameters and/or settings for obtaining services on a service provisioning server by the terminal.

16. A system according to claim 15, further comprising:
formatting means for receiving the terminal identification of the querying terminal, for formatting the terminal identification to a corresponding terminal identification code, and for querying the ENUM serving means on the code.

17. A system according to claim 15, wherein the ENUM serving means has entries for the full code of a terminal identification.

18. A system according to claim 15, wherein the ENUM serving means has entries for a part of the code of a terminal identification.

19. A system according to claim 15, wherein the ENUM serving means has entries which are the same for a group of terminals.

20. A system according to claim 15, wherein the ENUM serving means has entries for a lookup on a further serving means.

21. A system according to claim 15, wherein the query of the ENUM serving means is performed by a new blank terminal.

22. A system according to claim 15, wherein the query of the ENUM serving means is performed by a terminal every time a new session is activated.

23. A system according to claim 15, wherein the query of the ENUM serving means is performed by a terminal for updating services.

24. A system according to claim 15, wherein the query of the ENUM serving means is performed by a terminal for provisioning new services.

25. A system according to claim 15, wherein the terminal identification is the MSISDN of the terminal.

26. A system according to claim 15, wherein the terminal identification is a user's name.

27. A system according to claim 15, wherein the information, parameters and/or settings comprise communication network parameters, WAP parameters, a WAP gateway address, a URL for Setup, a Home page, Favorites, Public keys, IPv4, IPv6, a Default Classmark for multi-classmark devices, software updates, applets, a network storage location, user preference list and firmware updates.

28. A system according to claim 15, wherein the ENUM serving means is implemented in a DNS server in a data network.

29. An apparatus using Internet Engineering Task Force standardized system ENUM providing address translations between telephone numbers and Uniform Resource Locators, for provisioning services to terminals in a communication network system, said apparatus having entries in correspondence with codes of terminal identifications;
wherein, when a terminal queries said apparatus on the basis of an identification of the terminal, said apparatus is adapted to return records corresponding to a code of the terminal identification to the querying terminal, enabling the querying terminal to examine the records returned from the ENUM serving means and determine service data on the basis of the examined records, wherein the service data comprise information, parameters and/or settings for obtaining services on a service provisioning server by the querying terminal.

30. An apparatus according to claim 29, wherein said apparatus has entries for the full code of a terminal identification.

31. An apparatus according to claim 29, wherein said apparatus has entries for a part of the code of a terminal identification.

32. An apparatus according to claim 29, wherein said apparatus has entries which are the same for a group of terminals.

33. An apparatus according to claim 29, wherein said apparatus has entries for a lookup on a further serving means.

34. An apparatus according to claim 29, wherein the terminal identification is the MSISDN of the terminal.

35. An apparatus according to claim 29, wherein the terminal identification is a user's name.

36. An apparatus according to claim 29, wherein said apparatus is implemented in a DNS server in a data network.

37. A user terminal for communicating with a network system using Internet Engineering Task Force standardized system ENUM providing address translations between telephone numbers and Uniform Resource Locators, for provisioning services to terminals in the system,
wherein said user terminal is adapted to query an ENUM serving means having entries in correspondence with codes of terminal identifications, on the basis of an identification of said user terminal, to examine records returned from the ENUM serving means upon the query, the records corresponding to a code of the terminal identification, and to determine service data on the basis of the examined records, wherein the service data comprise information, parameters and/or settings for obtaining services on a service provisioning server by the terminal.

## Patentansprüche

1. Verfahren des Verwendens des von der Internet Engineering Task Force standardisierten Systems ENUM, das Adressübersetzungen zwischen Telefonnummern und Uniform Resource Locators, URLs, bereitstellt, um Dienste für Endgeräte in einem Kommunikationsnetzwerksystem bereitzustellen, wobei das Verfahren die Schritte umfasst:
Bereitstellen von Einträgen in einer ENUM Diensteinrichtung entsprechend Codes von Endgerätidentifikationen;
Abfragen der ENUM Diensteinrichtung durch ein Endgerät auf der Grundlage einer Identifikation des Endgerätes;
Rückgabe von Datensätzen entsprechend einem Code der Endgerätidentifikation von der ENUM Diensteinrichtung an das abfragende Endgerät; und
Untersuchen der von der ENUM Diensteinrichtung zurückgegebenen Datensätze durch das Endgerät und Bestimmen von Dienstdaten auf der Grundlage der untersuchten Datensätze, wobei die Dienstdaten Informationen, Parameter und/oder Einstellungen umfassen, damit das Endgerät Dienste auf einem Dienste bereitstellenden Server bezieht.

2. Verfahren gemäß Anspruch 1, wobei der Abfrageschritt umfasst:
Formatieren der Endgerätidentifikation in einen entsprechenden Endgerätidentifikationscode und Abfragen der ENUM Diensteinrichtung bezüglich des Codes.

3. Verfahren gemäß Anspruch 1, wobei der ENUM Diensteinrichtung Einträge für den ganzen Code einer Endgerätidentifikation bereitgestellt werden.

4. Verfahren gemäß Anspruch 1, wobei der ENUM Diensteinrichtung Einträge für einen Teil des Codes einer Endgerätidentifikation bereitgestellt werden.

5. Verfahren gemäß Anspruch 1, wobei der ENUM Diensteinrichtung Einträge bereitgestellt werden, die für eine Gruppe von Endgeräten dieselben sind.

6. Verfahren gemäß Anspruch 1, wobei der ENUM Diensteinrichtung Einträge für ein Nachschlagen in einer weiteren Diensteinrichtung bereitgestellt werden.

7. Verfahren gemäß Anspruch 1, wobei der Abfrageschritt von einem neuen unbelegten Endgerät durchgeführt wird.

8. Verfahren gemäß Anspruch 1, wobei der Abfrageschritt jedes Mal durchgeführt wird, wenn eine neue Sitzung aktiviert wird.

9. Verfahren gemäß Anspruch 1, wobei der Abfrageschritt zur Aktualisierung von Diensten durchgeführt wird.

10. Verfahren gemäß Anspruch 1, wobei der Abfrageschritt zum Bereitstellen neuer Dienste durchgeführt wird.

11. Verfahren gemäß Anspruch 1, wobei die Endgerätidentifikation die MSISDN des Endgerätes ist.

12. Verfahren gemäß Anspruch 1, wobei die Endgerätidentifikation ein Name eines Benutzers ist.

13. Verfahren gemäß Anspruch 1, wobei die Informationen, Parameter und/oder Einstellungen aufweisen:
Kommunikationsnetzwerkparameter, WAP Parameter, eine WAP-Gateway-Adresse, einen URL zur Installation, eine Homepage, Favoriten, öffentliche Schlüssel, IPv4, IPv6, ein Vorgabe-Dienstklassen-Kennzeichen für mehrfachdienstklassenfähige Vorrichtungen, Softwareaktualisierungen, Applets, einen Netzwerkspeicherort, Benutzerpräferenzliste und Firmwareaktualisierungen.

14. Verfahren gemäß Anspruch 1, wobei die ENUM Diensteinrichtung in einem DNS Server in einem Datennetz implementiert ist.

15. Kommunikationsnetzwerksystem zur Verwendung des von der Internet Engineering Task Force standardisierten Systems ENUM, das Adressübersetzungen zwischen Telefonnummern und Uniform Resource Locators, URLs, bereitstellt, um Dienste für Endgeräte in einem Kommunikationsnetzwerksystem bereitzustellen, wobei das System umfasst:
ENUM Diensteinrichtung, die Einträge entsprechend Codes von Endgerätidentifikationen umfasst,
wobei, wenn ein Endgerät die ENUM Diensteinrichtung auf der Grundlage einer Identifikation des Endgerätes abfragt, die ENUM Diensteinrichtung eingerichtet ist, um Datensätze entsprechend eines Codes von der Endgerätidentifikation an das abfragende Endgerät zurückzugeben, und das Endgerät eingerichtet ist um die von der ENUM Diensteinrichtung zurückgegebenen Datensätze zu untersuchen und um Dienstdaten auf der Grundlage der untersuchten Datensätze zu bestimmen, wobei die Dienstdaten Informationen, Parameter und/oder Einstellungen umfassen, damit das Endgerät Dienste auf einem Dienste bereitstellenden Server bezieht.

16. System gemäß Anspruch 15, wobei das System ferner umfasst:
eine Formatierungseinrichtung zum Empfang der Endgerätidentifikation des abfragenden Endgerätes, um die Endgerätidentifikation in einen entsprechenden Endgerätidentifikationscode zu formatieren, und um die ENUM Diensteinrichtung bezüglich des Codes abzufragen.

17. System gemäß Anspruch 15, wobei die ENUM Diensteinrichtung Einträge für den ganzen Code einer Endgerätidentifikation aufweist.

18. System gemäß Anspruch 15, wobei die ENUM Diensteinrichtung Einträge für einen Teil des Codes einer Endgerätidentifikation aufweist.

19. System gemäß Anspruch 15, wobei die ENUM Diensteinrichtung Einträge aufweist, die für eine Gruppe von Endgeräten dieselben sind.

20. System gemäß Anspruch 15, wobei die ENUM Diensteinrichtung Einträge für ein Nachschlagen in einer weiteren Diensteinrichtung aufweist.

21. System gemäß Anspruch 15, wobei die Abfrage der ENUM Diensteinrichtung von einem neuen unbelegten Endgerät durchgeführt wird.

22. System gemäß Anspruch 15, wobei die Abfrage der ENUM Diensteinrichtung von einem Endgerät jedes Mal durchgeführt wird, wenn eine neue Sitzung aktiviert wird.

23. System gemäß Anspruch 15, wobei die Abfrage der ENUM Diensteinrichtung von einem Endgerät zur Aktualisierung von Diensten durchgeführt wird.

24. System gemäß Anspruch 15, wobei die Abfrage der ENUM Diensteinrichtung von einem Endgerät zum Bereitstellen neuer Dienste durchgeführt wird.

25. System gemäß Anspruch 15, wobei die Endgerätidentifikation die MSISDN des Endgerätes ist.

26. System gemäß Anspruch 15, wobei die Endgerätidentifikation ein Name eines Benutzers ist.

27. System gemäß Anspruch 15, wobei die Informationen, Parameter und/oder Einstellungen aufweisen:
Kommunikationsnetzwerkparameter, WAP Parameter, eine WAP-Gateway-Adresse, einen URL zur Installation, eine Homepage, Favoriten, öffentliche Schlüssel, IPv4, IPv6, ein Vorgabe-Dienstklassen-Kennzeichen für mehrfachdienstklassenfähige Vorrichtungen, Softwareaktualisierungen, Applets, einen Netzwerkspeicherort, Benutzerpräferenzliste und
Firmwareaktualisierungen.

28. System gemäß Anspruch 15, wobei die ENUM Diensteinrichtung in einem DNS Server in einem Datennetz implementiert ist.

29. Vorrichtung die das von der Internet Engineering Task Force standardisierte System ENUM, das Adressübersetzungen zwischen Telefonnummern und Uniform Resource Locators, URLs, bereitstellt, verwendet um Dienste für Endgeräte in einem Kommunikationsnetzwerksystem bereitzustellen, wobei die Vorrichtung Einträge entsprechend Codes von Endgerätidentifikationen aufweist,
wobei, wenn ein Endgerät die Vorrichtung auf der Grundlage einer Identifikation des Endgerätes abfragt, die Vorrichtung eingerichtet ist, um Datensätze entsprechend eines Codes der Endgerätidentifikation an das abfragende Endgerät zurückzugeben, um das abfragende Endgerät zu befähigen, die von der ENUM Diensteinrichtung zurückgegebenen Datensätze zu untersuchen und Dienstdaten auf der Grundlage der untersuchten Datensätze zu bestimmen, wobei die Dienstdaten Informationen, Parameter und/oder Einstellungen umfassen, damit das abfragende Endgerät Dienste auf einem Dienste bereitstellenden Server bezieht.

30. Vorrichtung gemäß Anspruch 29, wobei die Vorrichtung Einträge für den ganzen Code einer Endgerätidentifikation aufweist.

31. Vorrichtung gemäß Anspruch 29, wobei die Vorrichtung Einträge für einen Teil des Codes einer Endgerätidentifikation aufweist.

32. Vorrichtung gemäß Anspruch 29, wobei die Vorrichtung Einträge aufweist, die für eine Gruppe von Endgeräten dieselben sind.

33. Vorrichtung gemäß Anspruch 29, wobei die Vorrichtung Einträge für ein Nachschlagen in einer weiteren Diensteinrichtung aufweist.

34. Vorrichtung gemäß Anspruch 29, wobei die Endgerätidentifikation die MSISDN des Endgerätes ist.

35. Vorrichtung gemäß Anspruch 29, wobei die Endgerätidentifikation ein Name eines Benutzers ist.

36. Vorrichtung gemäß Anspruch 29, wobei die Vorrichtung in einem DNS Server in einem Datennetz implementiert ist.

37. Benutzerendgerät zum kommunizieren mit einem Netzwerksystem unter Verwendung des von der Internet Engineering Task Force standardisierten Systems ENUM, das Adressübersetzungen zwischen Telefonnummern und Uniform Resource Locators, URLs, bereitstellt, um in dem System Dienste für Endgeräte bereitzustellen,
wobei das Benutzerendgerät eingerichtet ist, um eine ENUM Diensteinrichtung abzufragen, die Einträge entsprechend Codes von Endgerätidentifikationen aufweist, auf der Grundlage einer Identifikation des Benutzerendgerätes, um auf die Abfrage hin von der ENUM Diensteinrichtung zurückgegebene Datensätze zu untersuchen, wobei die Datensätze einem Code der Endgerätidentifikation entsprechen, und um Dienstdaten auf der Grundlage der untersuchten Datensätze zu bestimmen, wobei die Dienstdaten Informationen, Parameter und/oder Einstellungen umfassen, damit das Endgerät Dienste auf einem Dienste bereitstellenden Server bezieht.

## Revendications

1. Procédé d'utilisation du système ENUM normalisé par le groupe de travail IETF ("Internet Engineering Task Force")permettant des traductions d'adresses entre des numéros de téléphone et des adresses URL ("Uniform Ressource Location"), afin de fournir des services à des terminaux dans un système de réseau de communications, ledit procédé comprenant les étapes suivantes :
fourniture d'entrées dans un moyen de desserte ENUM en correspondance avec des codes d'identification de terminal ;
requête auprès du moyen de desserte ENUM par un terminal sur la base d'une identification du terminal ;
retour d'enregistrements correspondant à un code d'identification de terminal du moyen de desserte ENUM au terminal faisant la requête ; et
examen des enregistrements retournés depuis le moyen de desserte ENUM par le terminal et détermination des données de service sur la base des enregistrements examinés, dans lequel les données de service comprennent des informations, des paramètres et/ou des réglages permettant au terminal d'obtenir des services sur un serveur d'approvisionnement de services.

2. Procédé selon la revendication 1, dans lequel l'étape de requête comprend l'étape suivante :
formatage de l'identification de terminal selon un code d'identification de terminal correspondant et requête auprès du moyen de desserte ENUM selon le code.

3. Procédé selon la revendication 1, dans lequel le moyen de desserte ENUM est muni d'entrées pour le code complet d'identification d'un terminal.

4. Procédé selon la revendication 1, dans lequel le moyen de desserte ENUM est muni d'entrées pour une partie du code d'identification d'un terminal.

5. Procédé selon la revendication 1, dans lequel le moyen de desserte ENUM est muni d'entrées qui sont les mêmes pour un groupe de terminaux.

6. Procédé selon la revendication 1, dans lequel le moyen de desserte ENUM est muni d'entrées pour une consultation sur un autre moyen de desserte.

7. Procédé selon la revendication 1, dans lequel l'étape de requête est effectuée par un nouveau terminal vierge.

8. Procédé selon la revendication 1, dans lequel l'étape de requête est effectuée chaque fois qu'une nouvelle session est activée.

9. Procédé selon la revendication 1, dans lequel l'étape de requête est effectuée pour mettre à jour les services.

10. Procédé selon la revendication 1, dans lequel l'étape de requête est effectuée pour l'approvisionnement de nouveaux services.

11. Procédé selon la revendication 1, dans lequel l'identification de terminal est le numéro RNIS de station mobile du terminal.

12. Procédé selon la revendication 1, dans lequel l'identification de terminal est un nom d'utilisateur.

13. Procédé selon la revendication 1, dans lequel les informations, paramètres et/ou réglages comprennent des paramètres de réseau de communication, des paramètres WAP, une adresse de passerelle WAP, une adresse URL pour l'installation, une page d'accueil, des favoris, des clés publiques, le protocole IPv4, le protocole IPv6, un indicateur classmark par défaut pour les dispositifs à multiples indicateurs, des mises à jour logicielles, des applets, une position de stockage en réseau, une liste de préférences utilisateur et des mises à jour progicielles.

14. Procédé selon la revendication 1, dans lequel le moyen de desserte ENUM est mis en oeuvre dans un serveur DNS dans un réseau de données.

15. Système de réseau de communication permettant d'utiliser le système ENUM normalisé par le groupe de travail IETF permettant des traductions d'adresses entre des numéros de téléphone et des adresses URL, afin de fournir des services à des terminaux dans le système, ledit système comprenant :
un moyen de desserte ENUM possédant des entrées en correspondance avec des codes d'identification de terminal ;
dans lequel, lorsqu'un terminal effectue une requête auprès du moyen de desserte ENUM sur la base d'une identification du terminal, le moyen de desserte ENUM est adapté pour retourner des enregistrements correspondant à un code de l'identification de terminal au terminal qui effectue la requête et le terminal est adapté pour examiner les enregistrements retournés depuis le moyen de desserte ENUM et déterminer des données de service sur la base des enregistrements examinés, dans lequel les données de service comprennent des informations, des paramètres et/ou des réglages permettant au terminal d'obtenir des services sur un serveur d'approvisionnement de services.

16. Système selon la revendication 15, comprenant en outre :
des moyens de formatage destinés à recevoir l'identification de terminal du terminal qui effectue la requête, à formater l'identification de terminal selon un code d'identification de terminal correspondant et à effectuer une requête auprès du moyen de desserte ENUM selon le code.

17. Système selon la revendication 15, dans lequel le moyen de desserte ENLTM possède des entrées pour le code complet d'identification d'un terminal.

18. Système selon la revendication 15, dans lequel le moyen de desserte ENUM possède des entrées pour une partie du code d'identification d'un terminal.

19. Système selon la revendication 15, dans lequel le moyen de desserte ENUM possède des entrées qui sont les mêmes pour un groupe de terminaux.

20. Système selon la revendication 15, dans lequel le moyen de desserte ENUM possède des entrées pour une consultation sur un autre moyen de desserte.

21. Système selon la revendication 15, dans lequel la requête auprès du moyen de desserte ENUM est effectuée par un nouveau terminal vierge.

22. Système selon la revendication 15, dans lequel la requête auprès du moyen de desserte ENUM est effectuée par un terminal chaque fois qu'une nouvelle session est activée.

23. Système selon la revendication 15, dans lequel la requête auprès du moyen de desserte ENUM est effectuée par un terminal pour mettre à jour les services.

24. Système selon la revendication 15, dans lequel la requête auprès du moyen de desserte ENUM est effectuée par un terminal pour l'approvisionnement de nouveaux services.

25. Système selon la revendication 15, dans lequel l'identification de terminal est le numéro RNIS de station mobile du terminal.

26. Système selon la revendication 15, dans lequel l'identification de terminal est un nom d'utilisateur.

27. Système selon la revendication 15, dans lequel les informations, paramètres et/ou réglages comprennent des paramètres de réseau de communication, des paramètres WAP, une adresse de passerelle WAP, une adresse URL pour l'installation, une page d'accueil, des favoris, des clés publiques, le protocole IPv4, le protocole IPv6, un indicateur classmark par défaut pour les dispositifs à multiples indicateurs, des mises à jour logicielles, des applets, une position de stockage en réseau, une liste de préférences utilisateur et des mises à jour matérielles.

28. Système selon la revendication 15, dans lequel le moyen de desserte ENUM est mis en oeuvre dans un serveur DNS dans un réseau de données.

29. Appareil utilisant le système ENUM normalisé par le groupe de travail IETF permettant des traductions d'adresses entre des numéros de téléphone et des adresses URL, afin de fournir des services à des terminaux dans le système de réseau de communication, ledit appareil possédant des entrées en correspondance avec des codes d'identification de terminal.
dans lequel, lorsqu'un terminal effectue une requête auprès dudit appareil sur la base d'une identification du terminal, ledit appareil est adapté pour retourner des enregistrements correspondant à un code de l'identification de terminal au terminal qui effectue la requête, permettant au terminal qui effectue la requête d'examiner les enregistrements retournés depuis le moyen de desserte ENUM et de déterminer des données de service sur la base des enregistrements examinés, dans lequel les données de service comprennent des informations, des paramètres et/ou des réglages permettant au terminal d'obtenir des services sur un serveur d'approvisionnement de services.

30. Appareil selon la revendication 29, dans lequel ledit appareil possède des entrées pour le code complet d'identification d'un terminal.

31. Appareil selon la revendication 29, dans lequel ledit appareil possède des entrées pour une partie du code d'identification d'un terminal.

32. Appareil selon la revendication 29, dans lequel ledit appareil possède des entrées qui sont les mêmes pour un groupe de terminaux.

33. Appareil selon la revendication 29, dans lequel ledit appareil possède des entrées pour une consultation sur un autre moyen de desserte.

34. Appareil selon la revendication 29, dans lequel l'identification de terminal est le numéro RNIS de station mobile du terminal.

35. Appareil selon la revendication 29, dans lequel l'identification de terminal est un nom d'utilisateur.

36. Appareil selon la revendication 29, dans lequel ledit appareil est mis en oeuvre dans un serveur DNS dans un réseau de données.

37. Terminal d'utilisateur permettant de communiquer avec un système de réseau utilisant le système ENUM normalisé par le groupe de travail IETF permettant des traductions d'adresses entre des numéros de téléphone et des adresses URL, afin de fournir des services à des terminaux dans le système,
dans lequel ledit terminal d'utilisateur est adapté pour effectuer une requête auprès d'un moyen de desserte ENUM possédant des entrées en correspondance avec des codes d'identification de terminal, sur la base d'une identification dudit terminal d'utilisateur, pour examiner les enregistrements retournés depuis le moyen de desserte ENUM suite à la requête, les enregistrements correspondant à un code d'identification du terminal, et pour déterminer des données de service sur la base des enregistrements examinés, dans lequel les données de service comprennent des informations, des paramètres et/ou des réglages permettant au terminal d'obtenir des services sur un serveur d'approvisionnement de services.
